# EUROPÄISCHE PATENTSCHRIFT

(11) **EP 0 685 251 B1**
(45) Veröffentlichungstag und Bekanntmachung des Hinweises auf die Patenterteilung: **12.08.1998**
(21) Anmeldenummer: 95106585.3
(22) Anmeldetag: 02.05.1995
(51) Int. Cl.: B01D 27/06, B01D 29/21, B01D 46/24, B01D 46/42

(54) **Ringfilterelement mit stirnseitiger Vliesabdeckung**
Ring filter element having a front covering of non woven fabric
Elément filtrant annulaire à couverture de non-tissé sur la face

(30) Priorität: 03.06.1994 DE 4419361
(43) Veröffentlichungstag der Anmeldung: 06.12.1995
(73) Patentinhaber: KNECHT FILTERWERKE GMBH, 70376 Stuttgart (DE)
(72) Erfinder: Gebert, Hans, D-74080 Heilbronn-Böckingen (DE); Schneider, Horst, D-71336 Waiblingen (DE); Waibel, Hans, D-70378 Stuttgart (DE)
(74) Vertreter: Patentanwalts-Partnerschaft Rotermund + Pfusch

(56) Entgegenhaltungen:
- EP-A- 0 559 011
- DE-A- 3 837 423
- DE-A- 4 009 246

## Beschreibung

Die Erfindung betrifft ein Ringfilterelement nach dem Oberbegriff des Patentanspruchs 1.

Ein solches Ringfilterelement ist aus EP-A-0 559 011 A1 bekannt. Die stirnseitige Dichtung eines solchen Filterelementes mit einem Vlies aus thermoplastischem Material, das beispielsweise Polyester sein kann, ist äußerst kostengünstig herstellbar, indem die Verbindung des Vlieses mit dem Filterbahnmaterial durch Ultraschallschweißung erzeugt wird, siehe dazu die Schrift DE-A-4 009 246.

Bei dem obengenannten vorbekannten Filter ragt die Vliesabdeckung jeweils radial innen in das freie Ringfilterzentrum geringfügig hinein. Dabei ist im Zentrum des Ringfilterelementes zumindest im Bereich der stirnseitigen Enden ein axial innerhalb des Ringfilterelementes liegender Ring angeordnet, an dem der radial nach innen überstehende Vliesbereich anliegt. Wird das Ringfilterelement zentral auf ein zylindrisches Rohr aufgesteckt, so legt sich der radial innen überstehende Bereich des Vlieses an den axial angrenzenden Ring an und kann so als Dichtung zwischen der stirnseitigen Abdeckung des Filterelementes und dem Rohr, auf das es aufgeschoben ist, dienen.

Wegen der äußerst kostengünstigen Herstellbarkeit einer Vliesabdeckung sollen derart herstellbare Filterelemente auch in Fällen Einsatz finden, in denen an den Stirnseiten des Filterelementes Kunststoffteile aus kompaktem im wesentlichen festem Material für bestimmte Funktionszwecke, für die nachstehend noch einige Beispiele angegeben werden, notwendig sind.

Kunststoffteile aus kompaktem thermoplastischem Material wie insbesondere Polyester können nämlich nicht in allen Fällen wie ein solches Material in Vliesform kostengünstig im Ultraschallschweißverfahren auf die Stirnkanten eines Filterelementes aus insbesondere einer gefalteten beispielsweise Kunststoff enthaltenden Papierbahn aufgebracht werden.

Hiervon ausgehend beschäftigt sich die Erfindung mit dem Problem, gattungsgemäße Filterelemente, bei denen an den Stirnkanten Kunststoffteile aus kompaktem Material angebracht sein müssen, ähnlich kostengünstig herzustellen wie Filterelemente mit ausschließlich einer stirnseitigen Vliesabdeckung.

Unter dieser Zielrichtung gefundene Lösungen zeigen die Kennzeichen der Patentansprüche 1, 7 und 9 auf. Bevorzugte Lösungen sind in den abhängigen Patentansprüche definiert.

Die Wirksamkeit der Lösung nach Anspruch 1 beruht darauf, daß auf diese Weise auch kompakte, im Vergleich zu dem Vlies starre Kunststoffteile an den Stirnseiten des Filterelementes durch Ultraschallschweißen angebracht werden können. Dies geschieht in der Weise, daß in einem ersten Ultraschallschweißvorgang ein ringförmiges Vlies us thermoplastischem Material aufgebracht wird. Das an der Stirnseite zusätzlich zu befestigende feste kompakte Kunststoffteil wird in einem zweiten Ultraschallschweißprozeß befestigt. Diese Befestigung geschieht dadurch, daß das Kunststoffteil über das Vlies ausschließlich mit der unter dem Vlies liegenden rohrförmigen Einlage des Filterelementes, die eine Kunststoffinnenzarge sein kann, verschweißt wird.

Besonders vorteilhaft läßt sich die Schweißverbindung nach dem Kennzeichen des Anspruchs 1 durch eine Ausbildung der Anlagefläche des Kunststoffteiles nach Anspruch 2 erreichen.

Bei dieser vorteilhaften Ausgestaltung erfolgt lediglich eine Schweißverbindung an lokal einzelnen Punkten, die durch die von dem Kunststoffteil abragenden Vorsprünge bestimmt werden. In den Bereichen zwischen den Vorsprüngen wird das Vliesmaterial dicht verpreßt. Zu diesem Zweck muß die Höhe der Vorsprünge so ausgelegt sein, daß einerseits in den Zwischenräumen noch keine Verschweißung erfolgt und daß andererseits eine ausreichend dichte Verpressung des Vliesmaterials gegeben ist.

Ohne eine Maßnahme nach dem Anspruch 2 kann es insbesondere in denjenigen Fällen, in denen das Vliesmaterial nach radial innen zur Erzielung einer radialen Dichtung herausragt, zu einem Abscheren des Vliesmaterials nach einer erfolgten Ultraschallschweißverbindung kommen. Durch das zwischen den Vorsprüngen des Kunststoffteiles liegende Vliesmaterial, das entsprechend der Lehre des Anspruchs 2 nicht verschweißt, sondern nur verpreßt wird, wird ein solches Abscheren sicher vermieden.

Das stirnseitig aufzubringende Kunststoffteil kann beispielsweise eine flache Ringscheibe sein. Eine solche Ringscheibe aus festem kompaktem Material kann erwünscht sein, wenn das Filterelement an der betreffenden Stirnseite beispielsweise an einem lokal angreifenden Ventil anliegt, das das Vliesmaterial bei Relativbewegungen zwischen dem Filterelement und dem Ventil zerstören könnte.

Das aufzubringende Kunststoffteil kann nach Anspruch 4 ein Kunststoffring sein. Ein solcher Ring ist zum Beispiel erforderlich, wenn ein Filterelement einseitig auf ein Rohr aufgesteckt wird, gegen das beide Stirnseiten radial gedichtet sein sollen und eine solche Dichtung allein durch radial verpreßtes Vliesmaterial erzeugt werden soll.

Mit einer Ausbildung eines Filtermaterials nach der eingangs genannten EP 0 559 011 A1 wäre eine solche Dichtung an beiden Stirnseiten nicht möglich. Eine radiale Dichtung läßt sich bei jenem vorbekannten Filter nur an derjenigen Stirnseite erzielen, die zuerst auf ein Rohr aufgesteckt wird. In diesem Fall kann sich nämlich der radial nach innen überstehende Vliesbereich an den darunterliegenden Ring des Filterelementes anlegen und dadurch zwischen dem Rohr, auf das das Filterelement aufgeschoben wird, und jenem Ring des Filterelementes dichten.

Auf der gegenüberliegenden Stirnseite des Filterelementes geht dies bei einem Aufschieben auf das gleiche Rohr nicht, da dann der innere Vliesüberstand nach außen umgebogen wird und dann nach radial außen in dem Bereich, in dem er radial verpreßt werden soll, kein Widerlager besitzt.

In diesem Fall hilft ein axial außen auf die betreffende Stirnseite aufgeschweißter Ring, der dann für den umgebogenen Vliesbereich als Widerlager dienen kann.

In Fällen, in denen ein Filterelement einen solchen Aufbau besitzt, daß es sowohl von der einen als auch von der anderen Stirnseite aus durchgehend auf ein Rohr aufgeschoben werden kann, ist es zweckmäßig, an beiden Stirnseiten einen entsprechenden Außenring aufzuschweißen, damit das Element nicht versehentlich seitenverkehrt aufgesetzt werden kann.

Ferner gibt es noch Fälle, in denen eine Dichtung an den Stirnkanten des Filterelementes nicht über radial verpreßtes Vliesmaterial gewünscht wird, sondern durch einen gewöhnlichen elastischen Dichtring aus beispielsweise Gummi. In diesen Fällen kann ein ringförmiges Trägerteil zur Aufnahme solcher Dichtungen an den Stirnseiten des Filterelementes erfindungsgemäß aufgeschweißt sein. Die anzubringenden Dichtringe können dann für eine axiale oder radiale Dichtung ausgelegt sein.

Bei der Lösung nach Anspruch 7 wird das zusätzliche Teil durch die Vliesabdeckung hindurch über von dem zusätzlichen Teil ausgehende Dorne mit dem rohrförmigen im Zentrum des Filterelementes vorgesehenen Einlageteil verrastet. Das Vlies wird dabei zwischen dem rohrförmigen Einlageteil und dem zusätzlichen Teil dicht verspannt. Auf diese Weise kann beispielsweise das Filterelement an einem Ende dicht verschlossen werden. Es kann aber auch lediglich eine Ringscheibe als axiale Außenabdeckung des Vlieses aufgebracht werden.

Bei der Ausführung nach Anspruch 9 wird das zusätzliche Teil ebenfalls an einem in dem Filterelement zentral vorgesehenen rohrförmigen Einlageteil verrastet. Diese Verrastung erfolgt allerdings nicht durch die Vliesabdeckung hindurch. Die Dichtung zwischen dem zentralen Einlageteil und dem zusätzlichen Teil erfolgt in diesem Fall vielmehr durch das Vorsehen eines Ringspaltes zwischen dem Einlageteil und dem Zusatzteil, in dem der innere Rand der Vliesabdeckung radial dicht verspannt wird. Das eingerastete Zusatzteil kann damit das betreffende Ende des Filterelementes dicht verschließen. Dieses Zusatzteil kann aber auch als Funktionsträgerteil dienen. Beispielsweise kann es dazu verwendet werden, einen Schnappverschluß zwischen dem Filterelement und einem dieses umgebenden Gehäuseteil zu erzeugen.

Gemäß Anspruch 12 wird die Vliesabdeckung gleichzeitig mit den Stirnkanten des zick-zack-förmig gefalteten Filterbahnmaterials und der Stirnfläche eines in dem Filterelement zentral vorgesehenen rohrförmigen Einlageteiles ultraschallverschweißt. Der nach dem kennzeichnenden Teil dieses Anspruches vorgesehene Ringspalt zwischen den Stirnkanten des Filterbahnmaterials und dem Ringsteg des zentralen Einlageteiles ist bei einer gleichzeitigen Ultraschallschweißverbindung der Vliesabdeckung mit dem Filterbahnmaterial und dem Einlageteil erforderlich, damit das Vlies beim Ultraschallschweißen beim radialen Übergang von dem Filterbahnmaterial zu dem zentralen Einlageteil nicht abgeschert wird. Zur Vermeidung eines solchen Abscherens ist insbesondere die Maßnahme nach Anspruch 13 noch von besonderer Bedeutung.

Ausführungsbeispiele der Erfindung sind in der Zeichnung dargestellt.

Es zeigen
- Fig. 1 - 7: Längsschnitte durch eine Stirnseite eines Filterelementes mit verschiedenen aufgeschweißten Kunststoffteilen,
- Fig. 8: einen Schnitt durch ein auf eine Stirnseite eines Filterelementes aufzubringendes Kunststoffteil mit Vorsprüngen für eine punktförmige Verschweißung,
- Fig. 9: eine Draufsicht auf ein Kunststoffteil mit Vorsprüngen nach Fig. 8,
- Fig. 10: einen Schnitt durch den Endbereich eines Filterelementes mit einer durch eine Vliesabdeckung hindurchgesteckten Deckplatte mit einer Klemmverbindung zu einem zentralen Einlageteil des Filterelementes,
- Fig. 11: einen Schnitt durch einen Endbereich eines Filterelementes mit einem eingeschnappten Zusatzteil,
- Fig. 12: einen Schnitt durch den Endbereich eines Filterelementes mit einer gleichzeitig auf die Stirnkanten eines ringförmig gefalteten Filterbahnmaterials und eines zentralen Einlageteiles ultraschallaufgeschweißten Vliesabdeckung,
- Fig. 13: eine Draufsicht auf die aufgeschweißte Vliesabdeckung nach Fig. 12,
- Fig. 14: einen Längsschnitt durch ein ringförmiges Filterelement mit einem rohrförmigen Einlageteil und an den axialen Enden aufgeschweißten Vliesabdeckungen, von denen die eine direkt mit einem axial geschlossenen Ende des rohrförmigen Einlageteiles verschweißt ist und von denen die andere als Zwischenlage zwischen einer von außen auf das rohrförmige Einlageteil angeschweißten Ringscheibe dient,
- Fig. 15: einen Längsschnitt durch das rohrförmige Einlageteil des Filterelementes nach Fig. 14,
- Fig. 16: eine Draufsicht auf das verschlossene Ende des rohrförmigen Einlageteiles nach Fig. 15.

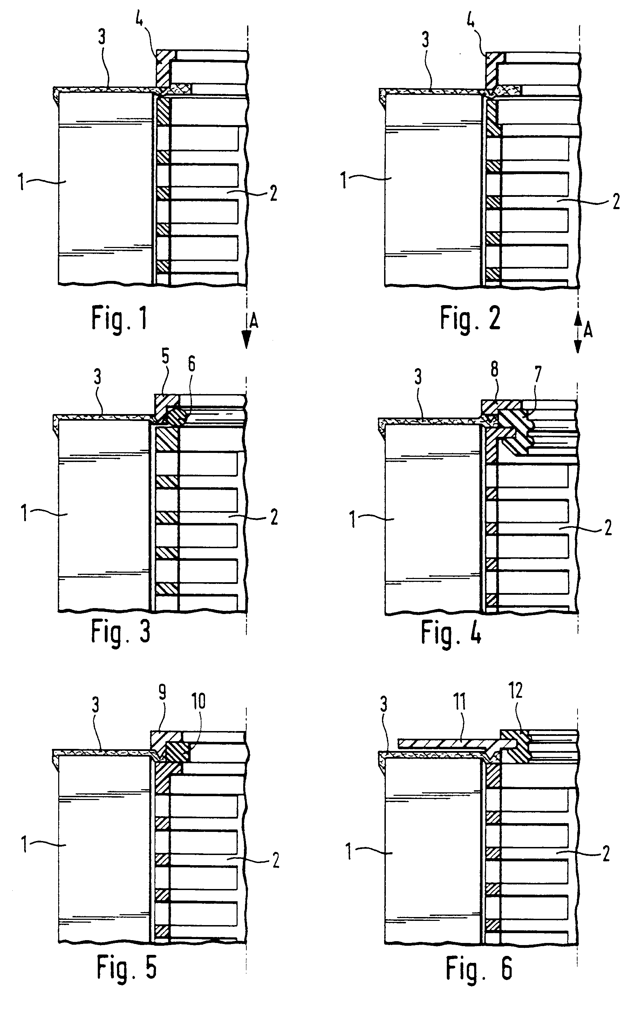

Bei der Ausführung nach Fig. 1 besteht das ringförmige Filterelement, von dem nur ein stirnseitiger Endbereich gezeigt ist, aus einer sternförmig gefalteten Filterbahn 1 aus Papier mit geringen Anteilen an thermoplastischem Kunststoff. Im Filterelementinneren befindet sich eine durch das gesamte Filterelement axial hindurchgehende rohrförmige Einlage 2 aus Kunststoff. Diese Einlage 2 stellt eine sogenannte Kunststoffinnenzarge des Filterelementes dar.

Gedichtet ist die Stirnseite des Filterelementes durch ein Vlies 3 aus Polyester, wobei dieses Polyester vorzugsweise ein Polyethylenterephtalat ist. Verbunden ist dieses Vlies mit den Stirnkanten der Filterbahn durch an sich bekanntes Ultraschallschweißen. Das Vliesmaterial ragt radial innen über die rohrförmige Einlage 2 hinaus.

Über das Vlies 3 als Zwischenlage ist auf die Stirnkante der rohrförmigen Einlage 2 ein Kunststoffring 4 mittels Ultraschall aufgeschweißt. Dieser Kunststoffring 4 hat im Schnitt eine L-Form. Dieser Ring dient dazu, ein radial außen liegendes Widerlager für den radial innen liegenden Teil des Vlieses 3 zu bilden, wenn das Filterelement in Richtung des Pfeiles A auf ein Rohr aufgesteckt wird.

Während die Fig. 1 eine Ausführung zeigt, bei der das Filterelement in Richtung des Pfeiles A auf ein durchgehendes Rohrstück aufgeschoben werden muß, zeigt die Fig. 2 eine Ausführung, bei der die Aufschieberichtung für das Filterelement gleichgültig ist. Denn dort ist auch der an den Kunststoffring 4 angrenzende Endbereich der rohrförmigen Einlage 2 so ausgebildet, daß der radial innen überragende Teil des Vlieses 3 dort kammerartig zwischen der Einlage 2 und dem Rohr, auf das das Filterelement aufgeschoben ist, verpreßbar ist, wie es in EP 0 559 011 A1 beschrieben ist.

Der bei der Ausführung nach Fig. 3 aufgeschweißte Kunststoffring 5 dient zur Aufnahme eines Dichtringes 6.

Ebenfalls zur Aufnahme eines Dichtringes 7 dient der Kunststoffring 8 bei der Ausführung nach Fig. 4.

Auch bei der Ausführung nach Fig. 5 dient ein etwas anders gestalteter Kunststoffring 9 wiederum zur Aufnahme eines Dichtringes 10. Eine weitere alternative Ausführungsform zeigt Fig. 6 mit einem Kunststoffring 11 und einem Dichtring 12.

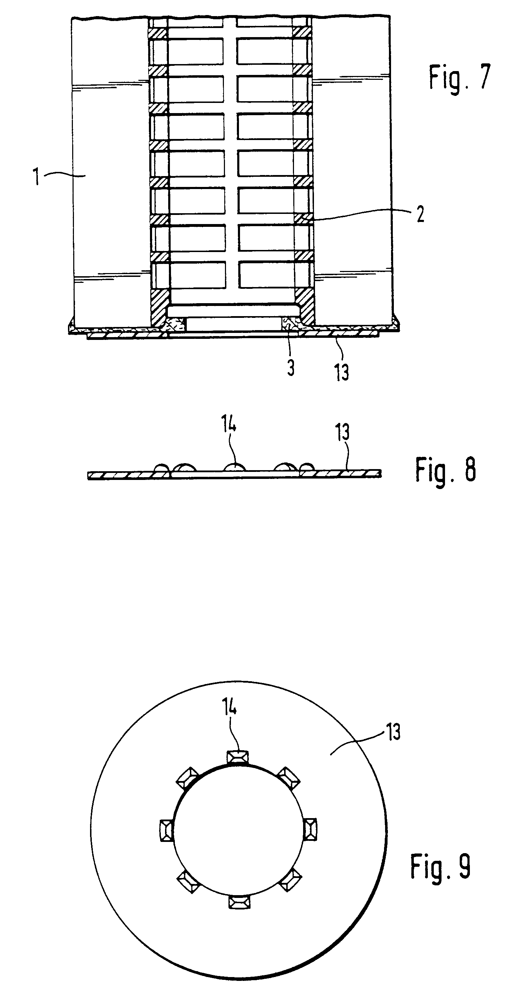

Nach Fig. 7 ist eine Deckscheibe 13 aus festem kompaktem Material über das Vlies 3 als Zwischenlage auf der Stirnkante der rohrförmigen Einlage 2 ultraschallmäßig aufgeschweißt. Der radial innen überragende Teil des Vlieses 3 dient in umgebogener Form wiederum in der weiter oben bereits mehrfach beschriebenen Form als radiale Dichtung.

In allen dargestellten Ausführungsbeispielen erfolgt das Ultraschall-Aufschweißen der Kunststoffringe 4, 5, 8, 9, 11 und der Deckscheibe 13 jeweils über angeformte Vorsprünge 14 (Fig. 8, 9). Die Höhe dieser Vorsprünge 14 ist derart gewählt, daß einerseits eine sichere Verschweißung an der rohrförmigen Einlage 2 gegeben ist und daß andererseits das zwischen den Vorsprüngen 14 liegende Vliesmaterial 3 ausreichend dicht verspannt, aber noch nicht verschweißt ist.

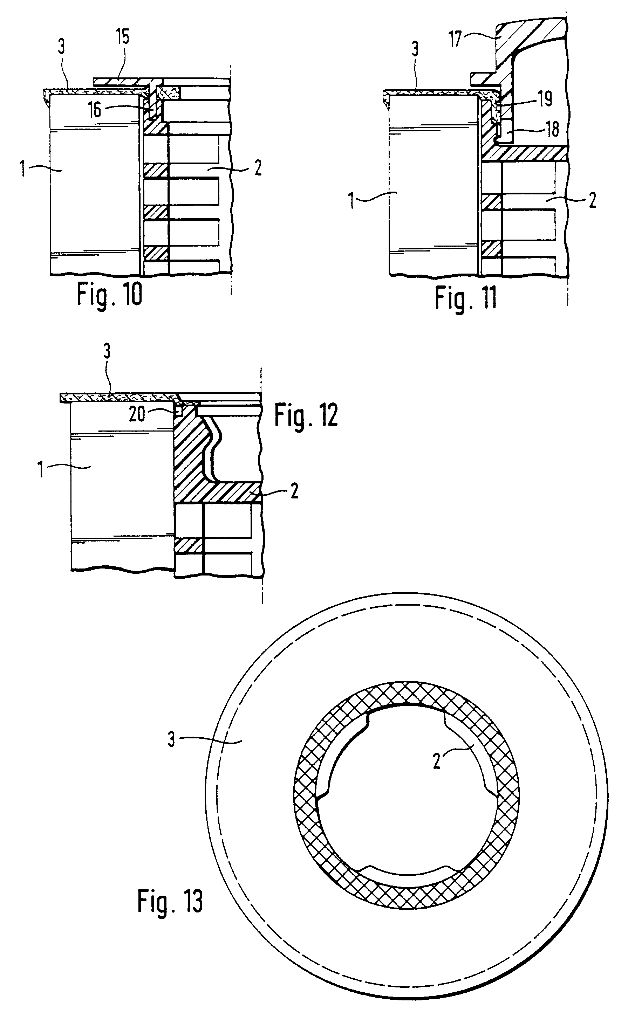

Bei der Ausführung nach Fig. 10 ist eine Deckplatte 15 auf das offene Ende eines Filterelementes fest aufgesetzt. Zu einem solchen festen Aufsetzen ist die Deckplatte 15 mit über ihren Umfang verteilten Dornen 16 versehen, die durch das Vlies 3 hindurch in entsprechende Aufnahmen in dem rohrförmigen Einlageteil 2 fest eingeklemmt sind. Die Rastverbindung ist derart ausgebildet, daß das Vlies 3 zwischen der Deckplatte 15 und der Stirnfläche der rohrförmigen Einlage 2 dicht verspannt ist, so daß die Deckplatte das Filterelement an dem betreffenden Ende dicht abschließt. Anstelle der Deckplatte können auch andere Funktionsträgerteile in der gleichen Weise an der rohrförmigen Einlage 2 des Filterelementes angebracht werden. Hierdurch ist ein Ersatz für eine Schweißverbindung nach den vorhergehenden Ausführungsbeispielen gegeben.

Bei dem Filterelement nach Fig. 11 ist ein Stöpsel 17 durch das offene Ende eines Filterelementes in das Innere des rohrförmigen Einlageteiles 2 über federnde Füße 18 eingeschnappt. Auch bei dieser Ausführung ist mit dem Stöpsel 17 ein dichter Verschluß des offenen Endes des Filterelementes möglich. Die Dichtheit wird dadurch erzielt, daß ein radial innen über den Rand der rohrförmigen Einlage 2 hinausragender Randbereich des Vlieses 3 zu einer Radialdichtung zwischen dem Stöpsel 17 und der rohrförmigen Einlage 2 herangezogen wird. Zu diesem Zweck ist dieser überragende Rand des Vlieses in einen radialen Spalt 19 dicht eingepreßt. Wie bei der Ausführung nach Fig. 10 kann anstelle des eingeschnappten Verschluß-Stöpsels 17 auch ein beliebiger Funktionsträger zur Aufnahme irgendwelcher an dem Filterelement anzubringender Teile dienen.

Ein Ausführungsbeispiel für einen äußerst einfach und damit kostengünstig zu erzielenden Verschluß eines offenen Endes eines Filterelementes ist in Fig. 12 gezeigt. Dort besitzt die rohrförmige Einlage 2 ein verschlossenes Ende. Das Vlies 3 ist gleichzeitig auf die Stirnkanten der Filterbahn 1 und die Stirnfläche der rohrförmigen Einlage 2 im Ultraschallverfahren aufgeschweißt. Die Materialien des Vlieses 3 und der rohrförmigen Einlage 2 enthalten jeweils zumindest thermoplastischen Kunststoff oder sind wie das Vlies 3 und die rohrförmige Einlage 2 vollständig aus einem solchen Material. Das Vlies 3 ist aus thermoplastischem Polyester. Das Material der Filterbahn 1 ist aus Papier und enthält geringe Anteile aus Kunststoffharzen.

Um bei einem gleichzeitigen Aufschweißen des Vlieses 3 im Ultraschallverfahren auf die Stirnkanten der Filterbahn 1 und der rohrförmigen Einlage 2 ein Abscheren des Vlieses 3 an dem Übergang zwischen Filterbahn 1 und rohrförmiger Einlage 2 zu vermeiden, ist an diesem Übergang ein Ringspalt 20 vorgesehen. Dieser Ringspalt sollte mindestens eine radiale Erstreckung von etwa 0,5 mm besitzen.

Eine weitere, insbesondere zusätzliche, Maßnahme zur Vermeidung eines Abscherens des Vlieses 3 an der radialen Außenkante der rohrförmigen Einlage 2 erfolgt durch die Verschweißung des Vlieses 3 auf dieser rohrförmigen Einlage 2 rasterförmig (Fig. 13). Rasterförmig soll hier bedeuten, daß keine vollflächige Verschweißung auf der Stirnfläche der Einlage 2 erfolgt, sondern vielmehr lediglich eine raster- bzw. netzartige Verschweißung in den Knotenpunkten oder Linien eines Flächennetzwerkes. Auf diese Weise bleiben jeweils elastische Bereiche an dem Vlies 3, die ein Abscheren an der radialen Außenkante der rohrförmigen Einlage 2 beim Übergang zu der Filterbahn 1 verhindern. Die rasterförmige Verschweißung wird durch die Verwendung einer Ultraschallschweiß-Sonotrode mit einer beispielsweise waffelartig rillierten Oberfläche erzielt.

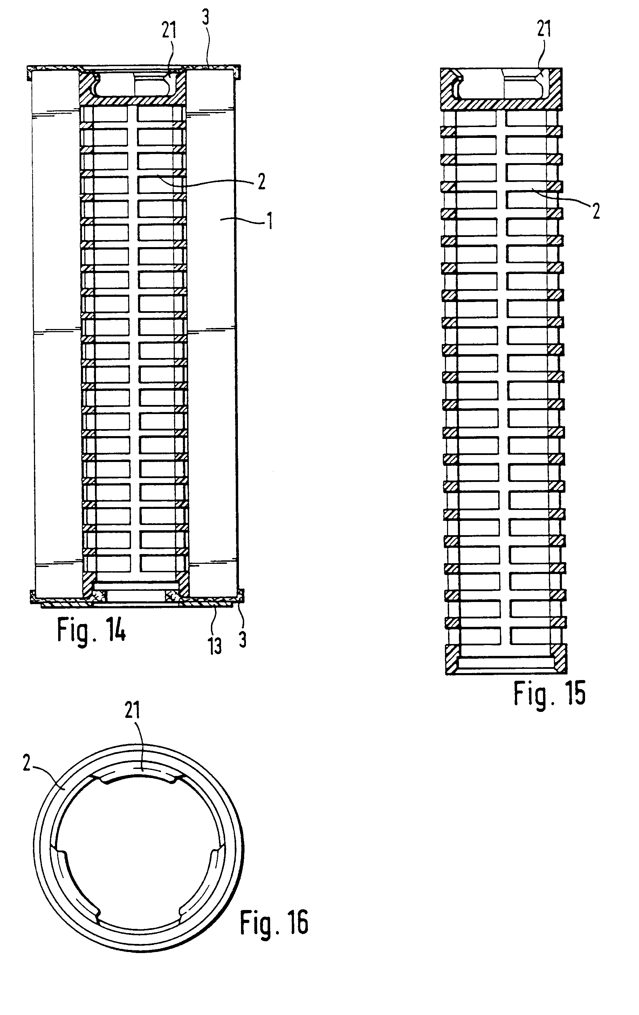

Das Filterelement nach Fig. 14 ist für den Einsatz in dem Ölfilter eines Verbrennungsmotors eines Kraftfahrzeuges bestimmt. Für diesen Anwendungsfall sind sämtliche beschriebenen Ausführungsbeispiele vorrangig geeignet und bestimmt.

Das Filterelement nach Fig. 14 soll insgesamt ausschließlich aus thermisch entsorgbarem Material bestehen.

Eine Besonderheit jenes Filterelementes besteht darin, daß es an einem Ende drehbar in ein Gehäuseteil einrastbar sein soll. An diesem Ende soll das Filterelement dicht verschlossen sein.

An dem anderen axialen Ende des Filterelementes soll das Filterelement radial dicht auf einen von dem Filtergehäuse ausgehenden Stutzen aufsteckbar sein. Bei in einem Filtergehäuse eingesetzten Zustand soll das Filterelement radial durchströmt werden.

Zur Erzielung des drehbaren Rastverschlusses des Filterelementes gegenüber dem Filtergehäuse ist die rohrförmige Einlage 2 an ihrem einen Ende mit einem entsprechenden topfförmigen Verschluß mit nach innen gezogenen Kragenabschnitten 21 (Fig. 15, 16) versehen. Über diese Abschnitte ist eine Verrasterung an einem ringförmigen Gegenhalter des Filtergehäuses möglich. Die bei einem Filterelement dieser Art übliche Bezeichnung für die rohrförmige Einlage 2 ist "Kunststoffinnenzarge".

An dem topfförmig ausgebildeten Ende der Einlageteiles 2 ist ein ringförmiges Vlies 3 in der nach Fig. 12 beschriebenen Weise im Ultraschallverfahren gleichzeitig auf die Stirnkanten des Filterbahnmaterials und die Stirnringfläche der Einlage 2 aufgeschweißt.

An dem anderen Ende des Filterelementes erfolgt die Dichtung gegenüber dem Stutzen, auf das das Filterelement aufzustecken ist, durch eine Radialdichtung, die von einem umgeklappten Innenbereich des Vlieses 3 an diesem Ende in an sich bekannter Weise gebildet wird. Auf dieses Ende des Ringfilters ist im Ultraschallverfahren eine ringförmige Deckscheibe 13 aufgebracht. Die Art des Aufbringens entspricht derjenigen, die im Zusammenhang mit den Figuren 8 und 9 näher beschrieben ist. Die Deckscheibe 13 dient bei diesem Filterelement dazu, dieses über die Deckscheibe axial an ein Ventil anlegen zu können. Ohne eine solche feste Deckscheibe bestünde die Gefahr einer Zerstörung des aufgeschweißten Vlieses 3 an diesem Ende des Filterelementes. Durch die Verwendung von Vliesendscheiben ist eine besonders kostengünstige Herstellung eines solchen Filterelementes möglich.

## Patentansprüche

1. Ringfilterelement für eine radiale Durchströmung aus einem ringförmig angeordneten Filtermaterial, insbesondere zick-zack-förmig gefaltetem Filterbahnmaterial, mit einer mindestens auf eine der Stirnseiten durch Ultraschallschweißen dicht aufgebrachten Vlies-Abdeckung aus zumindest teilweise thermoplastischem Material, die in ihrem radialen Innenbereich die Stirnringfläche einer im Zentrum des Ringfilters vorgesehenen rohrförmigen Einlage, insbesondere einer Kunststoffinnenzarge, überdeckt,
**dadurch gekennzeichnet,**
daß von axial außen ein Zusatzteil (4, 5, 8, 9, 11, 13) aus kompaktem, im Vergleich zu der Vlies-Abdeckung starrem Material, das zumindest Anteile an thermoplastischem Kunststoff enthält, über das Vlies (3) als Zwischenschicht mit der rohrförmigen Einlage (2) verschweißt ist.

2. Ringfilterelement nach Anspruch 1,
dadurch **gekennzeichnet,**
daß die Verschweißung eine Ultraschallverschweißung ist.

3. Ringfilterelement nach Anspruch 1 oder 2,
dadurch **gekennzeichnet,**
daß das angeschweißte Zusatzteil (4, 5, 8, 9, 11, 13) lokale der Stirnfläche der rohrförmigen Einlage (2) zugeordnete noppenartige Vorsprünge (14) besitzt und daß die Schweißverbindung gegenüber der rohrförmigen Einlage (2) allein über diese Vorsprünge (14) gegeben ist, während das Vlies (3) in den umfangsmäßig zwischen den Vorsprüngen (14) liegenden Bereichen dicht zwischen dem aufgeschweißten Zusatzteil (4, 5, 8, 9, 11, 13) und der Stirnfläche der rohrförmigen Einlage (2) verpreßt ist.

4. Ringfilterelement nach einem der vorhergehenden Ansprüche,
dadurch **gekennzeichnet,**
daß das aufgeschweißte Zusatzteil eine Ringscheibe (13) ist.

5. Ringfilterelement nach einem der Ansprüche 1 bis 3,
dadurch **gekennzeichnet,**
daß das aufgeschweißte Zusatzteil ein Ring (4) mit einem Innendurchmesser ist, der so bemessen ist, daß ein radial nach innen überragender Rand des Vlieses (3) durch Anlage an den Innenumfang dieses Ringes (4) als Dichtung gegenüber einem in diesen Ring (4) eingeführten zylindrischen Teil wirken kann.

6. Ringfilterelement nach einem der Ansprüche 1 bis 3,
dadurch **gekennzeichnet,**
daß das aufgeschweißte Zusatzteil (5, 8, 9, 11) ein Träger für radiale oder axial wirkende Endscheibendichtungen des Filterelementes ist.

7. Ringfilterelement nach dem Oberbegriff des Patentanspruchs 1,
dadurch **gekennzeichnet,**
daß von axial außen ein Zusatzteil (15) auf der Vliesabdeckung aufliegt, das über von diesem abstehende Dorne (16) durch das Vlies (3) hindurch mit der rohrförmigen Einlage (2) verrastet bzw. in diese eingeklemmt ist.

8. Ringfilterelement nach Anspruch 7,
dadurch **gekennzeichnet,**
daß dieses Zusatzteil (15) eine Ringscheibe ist.

9. Ringfilterelement nach dem Oberbegriff des Patentanspruchs 1,
dadurch **gekennzeichnet,**
daß durch mindestens eines der offenen Enden des Filterelementes ein Zusatzteil (17) in den Innenumfang der rohrförmigen Einlage (2) eingerastet bzw. eingeklemmt ist, und daß dieses Zusatzteil (17) zumindest einen zylindrischen Außenbereich besitzt, der zusammen mit einem radial zugeordneten ebenfalls zylindrischen Bereich der rohrförmigen Einlage (2) einen axial begrenzten Ringspalt (19) bildet, in dem der Innenrand des Vlieses (3) dicht einklemmbar ist.

10. Ringfilterelement nach Anspruch 7 oder 9,
dadurch **gekennzeichnet,**
daß das eingerastete Zusatzteil (15, 17) das betreffende offene Ende des Filterelementes dicht verschließt.

11. Ringfilterelement nach Anspruch 9 oder 10,
dadurch **gekennzeichnet,**
daß das eingerastete Zusatzteil (15, 17) für eine Rast- bzw. Schnappanbindung des Filterelementes an ein das Filterelement umschließendes Gehäuseteil ausgebildet ist.

12. Ringfilterelement nach einem der vorhergehenden Ansprüche,
**dadurch gekennzeichnet,**
daß die Vliesabdeckung (3) gleichzeitig mit den Stirnkanten bzw. Flächen des Filterbahnmaterials (1) und der rohrförmigen Einlage (2) ultraschallverscheißt ist, und daß zwischen der Stirnfläche der rohrförmigen Einlage (2) und dem Innenumfang der Stirnkanten des Materials der Filterbahn (1) ein axial begrenzter Ringspalt (20) vorgesehen ist.

13. Ringfilterelement nach Anspruch 12,
dadurch **gekennzeichnet,**
daß die radiale Erstreckung des Ringspaltes (20) mindestens etwa O,5mm beträgt.

14. Ringfilterelement nach Anspruch 12 oder 13,
dadurch **gekennzeichnet,**
daß die Vliesabdeckung (3) mit der Stirnringfläche der rohrförmigen EinTage (2) rastermäßig verschweißt ist.

## Claims

1. Annular filter element for radial permeation consisting of an annularly arranged filter material, in particular filter web material which is folded in a zigzag form, with a mat covering which is applied tightly by ultrasonic welding to at least one of the end faces, consists of at least partially thermoplastic material and, in its radially internal region, covers the annular end face of a tubular insert provided in the centre of the annular filter, in particular a plastic inner frame, characterized in that an add-on part (4, 5, 8, 9, 11, 13) made of solid material which is rigid in comparison with the mat covering and contains at least proportions of thermoplastic polymer is welded from axially externally via the mat (3) as intermediate layer to the tubular insert (2).

2. Annular filter element according to claim 1, characterized in that welding is ultrasonic welding.

3. Annular filter element according to claim 1 or 2, characterized in that the welded-on add-on part (4, 5, 8, 9, 11, 13) has local knob-like projections (14) associated with the end face of the tubular insert (2) and in that the welded joint to the tubular insert (2) is produced merely by these projections (14) while the mat (3) is compressed tightly between the welded-on add-on part (4, 5, 8, 9, 11, 13) and the end face of the tubular insert (2) in the regions located peripherally between the projections (14).

4. Annular filter element according to one of the preceding claims, characterized in that the welded-on add-on part is an annular disc (13).

5. Annular filter element according to one of claims 1 to 3, characterized in that the welded-on add-on part is a ring (4) with an internal diameter which is so dimensioned that a radially inwardly projecting border of the mat (3) can act as a seal from a cylindrical part introduced into this ring (4) by resting on the internal contour of this ring (4).

6. Annular filter element according to one of claims 1 to 3, characterized in that the welded-on add-on part (5, 8, 9, 11) is a carrier for radial or axially acting end disc seals of the filter element.

7. Annular filter element according to the preamble of claim 1, characterized in that an add-on part (15) rests from axially externally on the mat covering, the add-on part (15) engaging via rods (16) projecting therefrom through the mat (3) with the tubular insert (2) and being clamped therein.

8. Annular filter element according to claim 7, characterized in that this add-on part (5) is an annular disc.

9. Annular filter element according to the preamble of claim 1, characterized in that an add-on part (17) is engaged or clamped through at least one of the open ends of the filter element into the internal contour of the tubular insert (2) and in that this add-on part (17) has at least one cylindrical external region which together with a radially associated, also cylindrical region of the tubular insert (2), forms an axially limited annular gap (19) in which the internal border of the mat (3) can be tightly clamped.

10. Annular filter element according to claim 7 or 9, characterized in that the engaged add-on part (15, 17) tightly seals the respective open end of the filter element.

11. Annular filter element according to claim 9 or 10, characterized in that the engaged add-on part (15, 17) is designed for a catch or snap connection between the filter element and a casing part surrounding the filter element.

12. Annular filter element according to one of the preceding claims, characterized in that the mat covering (3) is simultaneously ultrasonically welded to the face edges or faces of the filter web material (1) and the tubular insert (2) and in that an axially limited annular gap (20) is provided between the end face of the tubular insert (2) and the internal contour of the face edges of the material of the filter web (1).

13. Annular filter element according to claim 12, characterized in that the radial dimension of the annular gap (20) is at least about 0.5 mm.

14. Annular filter element according to claim 12 or 13, characterized in that the mat covering (3) is welded in the manner of a grid to the annular end face of the tubular insert (2).

## Revendications

1. Elément filtrant annulaire pour une traversée radiale dans un matériau filtrant disposé de façon annulaire, en particulier un matériau de bande filtrante plié en zigzag, avec une couverture de non-tissé installée de façon dense par soudage par ultrasons sur au moins l'une des faces et réalisée au moins partiellement en matérieau thermoplastique, qui recouvre dans sa zone intérieure radiale la surface annulaire frontale d'un intercalaire tubulaire prévu au centre du filtre annulaire, en particulier d'un châssis interne en plastique, caractérisé en ce qu'une pièce supplémentaire (4, 5, 8, 9, 11, 13) axialement extérieure dans un matériau compact et rigide en comparaison de la couverture de non-tissé, qui contient au moins une partie de plastique thermoplastique, est soudée au-dessus du non-tissé (3) comme couche intermédiaire avec l'intercalaire tubulaire (2).

2. Elément filtrant annulaire selon la revendication 1, caractérisé en ce que le soudage est un soudage par ultrasons.

3. Elément filtrant annulaire selon la revendication 1 ou 2, caractérisé en ce que la pièce supplémentaire soudée (4, 5, 8, 9, 11, 13) possède des saillies (14) de type boutons disposées localement sur la surface frontale de l'intercalaire tubulaire (2) et en ce que la liaison soudée relativement à l'intercalaire tubulaire (2) est réalisée uniquement via ces saillies (14), pendant que le non-tissé (3) est comprimé de façon dense dans les zones situées de façon périphérique entre les saillies (14) entre la pièce supplémentaire soudée (4, 5, 8, 9, 11, 13) et la surface frontale de l'intercalaire tubulaire (2).

4. Elément filtrant annulaire selon l'une des revendications précédentes, caractérisé en ce que la pièce supplémentaire soudée est une plaque annulaire (13).

5. Elément filtrant annulaire selon l'une des revendications 1 à 3, caractérisé en ce que la pièce supplémentaire soudée est une bague (4) ayant un diamètre intérieur qui est mesuré de telle manière qu'un bord du non-tissé (3) débordant radialement vers l'intérieur, en reposant contre le contour intérieur de cette bague (4), puisse faire office de joint d'étanchéité relativement à une pièce cylindrique introduite dans cette bague (4).

6. Elément filtrant annulaire selon l'une des revendications 1 à 3, caractérise en ce que la pièce supplémentaire soudée (5, 8, 9, 11) est un support pour joints de plaques terminales radiaux ou à action axiale de l'élément filtrant.

7. Elément filtrant annulaire selon le préambule de la revendication 1, caractérisé en ce qu'une pièce supplémentaire (15) axialement extérieure repose sur la couverture de non-tissé et qu'elle s'enclenche avec l'intercalaire tubulaire (2) ou se coince dans celui-ci via des broches (16) partant de celle-ci au travers du non-tissé (3).

8. Elément filtrant annulaire selon la revendication 7, caractérisé en ce que cette pièce supplémentaire (15) est une plaque annulaire.

9. Elément filtrant annulaire selon le préambule de la revendication 1, caractérisé en ce que par au moins l'une des extrémités ouvertes de l'élément filtrant une pièce supplémentaire (17) s'enclenche ou se coince dans le contour intérieur de l'intercalaire tubulaire (2), et en ce que cette pièce supplémentaire (17) possède au moins une zone extérieure cylindrique, qui avec une zone également cylindrique de l'intercalaire tubulaire (2) disposée de façon radiale forme une fente annulaire (19) limitée axialement, dans laquelle le bord intérieur du non-tissé (3) peut être serré hermétiquement.

10. Elément filtrant annulaire selon la revendication 7 ou 9, caractérisé en ce que la pièce supplémentaire enclenchée (15, 17) ferme hermétiquement l'extrémité ouverte concernée de l'élément filtrant.

11. Elément filtrant annulaire selon la revendication 9 ou 10, caractérisé en ce que la pièce supplémentaire enclenchée (15, 17) est conçue pour une liaison à cran d'arrêt ou à encliquetage de l'élément filtrant sur une partie enveloppe entourant l'élément filtrant.

12. Elément filtrant annulaire selon l'une des revendications précédentes, caractérisé en ce que la couverture de non-tissé (3) est soudée par ultrasons simultanément avec les bords frontaux ou surfaces frontales du matériau de bande filtrante (1) et l'intercalaire tubulaire (2), et en ce que, entre la surface frontale de l'intercalaire tubulaire (2) et le contour intérieur des bords frontaux du matériau de la bande filtrante (1), il est prévu une fente annulaire (20) limitée axialement.

13. Elément filtrant annulaire selon la revendication 12, caractérisé en ce que l'extension radiale de la fente annulaire (20) est au moins égale à environ 0,5 mm.

14. Elément filtrant annulaire selon la revendication 12 ou 13, caractérisé en ce que la couverture de non-tissé (3) est soudée à la façon d'une trame avec la surface annulaire frontale de l'intercalaire tubulaire (2).
